# EUROPEAN PATENT SPECIFICATION

(11) **EP 0 361 597 B1**
(45) Date of publication and mention of the grant of the patent: **24.03.1993**
(21) Application number: 89202369.8
(22) Date of filing: 20.09.1989
(51) Int. Cl.: A23J 3/00

(54) **Process for preparing improved hydrolysed protein**
Verfahren zur Herstellung von verbessertem Proteinshydrolysat
Procédé de préparation d'un hydrolysat de protéines

(30) Priority: 26.09.1988 EP 88202087; 17.10.1988 GB 8824242
(43) Date of publication of application: 04.04.1990
(73) Proprietor: UNILEVER N.V., 3013 AL Rotterdam (NL); UNILEVER PLC, London EC4P 4BQ (GB)
(72) Inventor: De Rooij, Johannes Franciscus Maria, NL-1213 CK Hilversum (NL); Ward, Brain Alan, Snodland Kent ME6 5HX (GB); Ward, Maurice, Ashford Kent TN25 6PU (GB)
(74) Representative: Dries, Antonius Johannes Maria

(56) References cited:
- EP-A- 0 209 921
- EP-A- 0 226 769

## Description

The invention relates to a chemical process for improving hydrolysed protein, in particular to HCl-hydrolysed protein.
The hydrolysis of proteins by treatment with hydrochloric acid was developed by Liebig in the middle of the last century. Since then the method has been extensively employed for the commercial production of food supplements and flavours.

In commercial operations it is customary to hydrolyse the mainly vegetable proteins by boiling with strong hydrochloric acid followed by cooling and neutralization of the hydrolysate with sodium carbonate or sodium hydroxide and removal of the solid non-hydrolysed material. The hydrolysis temperature is normally in the range from 100 to 120°C and the reaction time from 2 to 24 hours.

The degree of hydrolysis normally is between 60 and 85% of the amide groups. In the case of pure protein starting materials higher degrees of hydrolysis can be obtained.

Suitable protein hydrolysate starting material materials can be for example casein, soya bean protein, gluten and oil seed cake materials. The protein hydrolysis is carried out in the conventional way whilst stirring the mixture in a reactor which is inert to HCl at high temperatures.

Studies have shown that protein hydrolysates prepared with hydrochloric acid contain a quantity of dichloropropanols (DCP's), especially 1,3-dichloropropane-2-ol and monochloropropanediols (MCP's) and the problem of their elimination has arisen.

According to GB-A-2 183 659 (Société Des Produits Nestlé SA) hydrochloric acid (HCl) hydrolysed protein is first freed from the insolubles and then subjected to steam distillation under reduced pressure while keeping the density of the hydrolysate at a substantially constant level in order to eliminate any 1,3-dichloropropane-2-ol present.

Also it is known from EP-A- 209 921 (Unilever) to desalinate protein hydrolysate dissolved in a polar solvent by fractionating the solution by means of gel filtration over a porous material having a pore diameter between 0.5 and 2.5 nanometers.

Whilst the elimination of 1,3-dichloropropane-2-ol from HCl-hydrolysed protein according to GB-A-2 183 659 is desirable in these food supplements and flavours there has been a need for methods which remove the full range of MCP's and DCP's more efficiently from these products.

The present invention provides a method for improving HCl-hydrolysed protein by subjecting an aqueous solution thereof to gel permeation chromatography (using a porous material having an equivalent pore diameter between 0.5 and 2.5 nanometers in which a fraction is eluted which is substantially free from monochloropropanols, and optionally free from dichloropropanols whilst at a substantial quantity of say at least 40, preferably at least 50% (w.w.) of the sodium chloride is retained.

It should be noted that the desalination process known from EP-A- 209 921 in view of the fact that the molecular weight and size of monochloropropanediols and dichloropropanols resembles that of some amino acids, would not seem suitable for the separation of amino acids from chloropropanols.
According to this known process the amino acids are first eluted and the salt remains on the porous material. It was subsequently found that the MCP's and DCP's also remained on the porous material and would be eluted when a subsequent batch of protein hydrolysate was being processed on the same column.

In a preferred embodiment of the invention the gel permeation technique is combined with a steam distillation step. It is this combination of steps which leads to a more efficient purification of the protein hydrolysate, because gel permeation can be conducted at a higher throughput when this is followed by distillation. Where gel permeation and (steam) distillation are combined it is preferred that the gel permeation step precedes the distillation step. It is preferred to allow the amount of water in the hydrolysate to drop during the distillation step.

For good results it is recommended that the porous material has an equivalent pore diameter between 0.5 and 2.5 , preferably between 1.0 and 2.0 nanometers and such materials as cross-linked dextrans are conveniently and readily available. Very suitable materials are e.g. Sephadex G 10 and G 15 (Sephadex is a tradename of Pharmacia AB, Uppsala, Sweden.)
It is normally characteristic to carry out the gel permeation step in such a way that after the sodium chloride has been eluted, elution is continued with at least twice the amount of eluant required for removing amino acids and salt before introducing another amount of protein hydrolysate.
In a preferred embodiment of the invention gel permeation chromatography (GPC) and distillation are combined in such a way that the gel permeation technique is carried out in a cyclic pattern of operation. Injections of HCl-hydrolysed protein are made so that a fraction is eluted which contains dichloropropanols together with amino acids and salt (which fraction is substantially free from monochloropropanediols), from which fraction the dichloropropanols are subsequently removed by (steam) distillation. This distillation step can be conducted so that the amount of water in the hydrolysate is decreased or so that the amount of water remains substantially constant (steam stripping). When the process according to the present invention is carried on a larger scale it is recommended to use a plurality of columns packed with porous material which are alternately rinsed and used for separation. By applying the process according to the present invention one generally obtains a product which contains still at least 50% of the original content of sodium chloride, but which is free from detectable amounts of monochloropropanediols and dichloropropanols.

The protein hydrolysate prepared according to the present invention can be used with advantage as a savoury flavour, in foodstuffs, such as soups, beefburgers,sausages, sauces, goulash etc.

The improved protein hydrolysates according to the present invention are also excellent starting materials in the preparation of reaction flavours in which the hydrolysate is reacted with mono- and di-saccharides, cysteine/cystine, thiamine etc. in which reaction flavour a major part of the starting amino acids remain unchanged.

The detection method for the various chloropropanols used according to the present specification is a modification of the method described on page 5 of GB-A-2 183 659 (Soc. Prod. Nestlé), which method has been extended by improved extraction techniques as to permit also MCP determination.

The invention is illustrated by the following examples:

### General

For all examples use was made of a thermostatic gel-permeation (GPC) column having a length of 100 cm and an internal diameter of 113 mm which was filled to a height of 70 cm with pre-swollen Sephadex G-10 resin (a cross-linked dextran ex Pharmacia AB, Uppsala, Sweden) with an equivalent pore diameter between 0.5 and 2.5 nanometers. The column temperature was maintained at ambient.

### Example I

Protein hydrolysate with an NaCl and total solids content of 19.9% and 37.5% respectively and a content of 21.6 ppm for the MCP's and 8 ppm for the DCP's was diluted 50% v/v with deionised water to give a homogeneous mixture. This mixture was then pumped to the GPC column and eluted from the column with deionised water. The eluate from the column was collected as fractions and analyzed for salt, solids, MCP and DCP content. The contents of MCP's and DCP's were below their levels of detection of 1 and 0.05 ppm respectively. Initial and subsequent fractions, which when bulked together contained 80% of original salt, were combined and concentrated using a rotary evaporator to 40% total solids. The concentrate and distillate were then again analyzed for MCP and DCP content and also found to be below the levels of detection.

### Example II

Using an equivalent homogeneous mixture to that described in Example 1 a small quantity of 1,3-dichloropropane-2-ol was added to increase the concentration by a factor of 10. This mixture was then pumped to the GPC column and eluted from the column with deionised water and collected as fractions. The elution of material from the column was extended to ensure that all of the 1,3-dichloropropane-2-ol had been flushed from the column. All fractions were then analyzed for salt, solids and MCP and DCP content. The presence of 1,3-dichloropropane-2-ol in fractions was detected long after the elution of salt had ceased. Initial and subsequent fractions which, when bulked together contained 80% of the original salt, were combined with fractions containing 1,3-dichloropropane-2-ol and concentrated to 40% solids using a rotary evaporator. The concentrate and distillate were then again analyzed for the presence of DCP's and found to be below the level of detection of 0.05 ppm in the concentrate but detectable in the distillate.

### Example III

Using an equivalent homogeneous mixture to that described in Example I, a small quantity of 3-chloropropane-1,2 diol was added to increase the concentration of this substance by a factor of 10. This mixture was then pumped to a GPC column and eluted from the column with deionised water and collected as fractions. The elution of material from the column was extended to ensure that all of the 3-chloropropane-1,2-diol had been flushed from the column. All fractions were then analyzed for salt, solids , DCP's and MCP's. The presence of 3-chloropropane-1,2-diol was detected in the latter fractions containing salt. Initial and subsequent fraction which, when bulked together contained 80% of the original salt, were combined with fractions containing 3-chloropropane-1,2-diol and concentrated to 40% solids using a rotary evaporator. The concentrate and distillate, were then analyzed for the presence of MCP's which was found to be below the level of detection (0.05 ppm) in the distillate but detectable in the concentrate.

## Claims

1. A process for improving HCl-hydrolysed protein characterized by subjecting an aqueous solution thereof to gel permeation chromatography using a porous material having an equivalent average pore diameter between 0.5 and 2.5 nanometers in which a fraction is eluted which is substantially free of monochloropropanediols whilst at least 40% of the sodium chloride is retained.

2. A process according to claim 1 characterized in that the gel permeation technique is combined with a distillation step.

3. A process according to claim 2 characterized in that the gel permeation step is followed by a steam distillation step.

4. A process according to claim 2 characterized in that the gel permeation step is preceded by a distillation step.

5. A process according to claim 2, 3 or 4 characterized in that during the distillation step the water content of the hydrolysate is reduced.

6. A process according to claim 2-5, characterized in that the gel permeation technique and distillation are carried out in a cyclic pattern of operation with repeated injections of HCl hydrolysed protein so that a fraction is obtained which is substantially free from monochloropropandiols and optionally dichloropropanols but contain amino acids and salt.

7. A process according to claim 2 or 3 characterized in that any dichloropropanols are substantially removed from the eluate by steam stripping.

8. A method according to any of the preceding claims so that after amino acids and salt have been eluted, elution is continued with at least twice the first amount of eluant before another amount of protein hydrolysate is introduced.

9. A process according to any of the preceding claims characterized in that a plurality of columns packed with porous material are involved which are alternately rinsed and used for separation.

10. A process according to any of the preceding claims in which at least 50% (w.w.) of the sodium chloride is retained.

## Patentansprüche

1. Verfahren zum Verbessern eines mit HCl hydrolysierten Proteins, dadurch gekennzeichnet, daß man eine wäßrige Lösung desselben einer Gelpermeations-chromatographie unter Verwendung eines porösen Materials mit einem äquivalenten durchschnittlichen Porendurchmesser zwischen 0,5 und 2,5 nm unterzieht, bei der eine Fraktion eluiert wird, die im wesentlichen frei von Monochlorpropandiolen ist, während mindestens 40 % des Natriumchlorids zurückgehalten werden.

2. Verfahren nach Anspruch 1, dadurch gekennzeichnet, daß die Gelpermeationstechnik mit einem Destillationsschritt kombiniert wird.

3. Verfahren gemäß Anspruch 2, dadurch gekennzeichnet, daß dem Gelpermeationsschritt ein Wasserdampfdestillationsschritt folgt.

4. Verfahren nach Anspruch 2, dadurch gekennzeichnet, daß dem Gelpermeationsschritt ein Destillationsschritt vorangeht.

5. Verfahren nach Anspruch 2, 3 oder 4, dadurch gekennzeichnet, daß der Wassergehalt des Hydrolysates während des Destillationsschrittes verringert wird.

6. Verfahren nach Anspruch 2 bis 5, dadurch gekennzeichnet, daß die Gelpermeationstechnik und die Destillation in einem zyklischen Betriebsmuster mit wiederholten Einleitungen des mit HCl hydrolysierten Proteins durchgeführt wird, so daß man eine Fraktion erhält, die von Monochlorpropandiolen und wahlweise von Dichlorpropanolen im wesentlichen frei ist, jedoch Aminosäuren und Salz enthält.

7. Verfahren nach Anspruch 2 oder 3, dadurch gekennzeichnet, daß jegliche Dichlorpropanole durch Wasserdampfstrippen aus dem Eluat im wesentlichen entfernt werden.

8. Verfahren nach irgendeinem der vorhergehenden Ansprüche, so daß nach Elution der Aminosäuren und des Salzes die Elution mit mindestens dem Zweifachen der ersten Menge an Elutionsmittel fortgesetzt wird, bevor eine weitere Menge Proteinhydrolysat eingeführt wird.

9. Verfahren nach irgendeinem der vorhergehenden Ansprüche, dadurch gekennzeichnet, daß eine Vielzahl von mit porösem Material gepackten Säulen verwendet wird, die alternativ gespült und zur Trennung verwendet werden.

10. Verfahren nach irgendeinem der vorhergehenden Ansprüche, bei dem mindestens 50 % (Gew./Gew.) des Natriumchlorids bewahrt bleiben.

## Revendications

1. Procédé d'amélioration de protéine hydrolysée par HCl caractérisé par les opérations consistant à soumettre une solution aqueuse de celle-ci à une chromatographie de perméation de gel en utilisant un matériau poreux ayant un diamètre de pore moyen équivalent compris entre 0,5 et 2,5 nanomètre, dans lequel une fraction, qui est éluée, est pratiquement exempte de monochloropropanediols tandis qu'au moins 40% du chlorure de sodium sont retenus.

2. Procédé selon la revendication 1, caractérisé en ce que la technique de perméation de gel est combinée avec une opération de distillation.

3. Procédé selon la revendication 2, caractérisé en ce que l'opération de perméation de gel est suivie par une opération d'entraînement à la vapeur d'eau.

4. Procédé selon la revendication 2, caractérisé en ce que l'opération de perméation de gel est précédée par une opération de distillation.

5. Procédé selon la revendication 2, 3 ou 4, caractérisé en ce que, pendant l'opération de distillation, la teneur en eau de l'hydrolysat est réduite.

6. Procédé selon les revendications 2 à 5, caractérisé en ce que la technique de perméation de gel et la distillation sont réalisées dans un schéma cyclique d'opérations avec des injections répétées de protéine hydrolysée par HCl de sorte qu'une fraction, qui est obtenue, soit pratiquement exempte de monochloropropanediols et facultativement de dichloropropanols, mais contienne des aminoacides et du sel.

7. Procédé selon la revendication 2 ou 3, caractérisé en ce que tous dichloropropanols sont pratiquement éliminés de l'éluat par entraînement à la vapeur d'eau.

8. Procédé selon l'une quelconque des revendications précédentes de façon qu'après que les aminoacides et le sel sont élués, l'élution est poursuivie avec au moins deux fois la première quantité d'éluant avant qu'une autre quantité d'hydrolysat de protéine soit introduite.

9. Procédé selon l'un quelconque des revendications précédentes, caractérisé en ce qu'un ensemble de colonnes remplies avec un matériau poreux est impliqué, colonnes qui sont alternativement rincées et utilisées pour la séparation.

10. Procédé selon l'une quelconque des revendications précédentes, dans lequel au moins 50% (p/p) du chlorure de sodium est retenu.
